# EUROPÄISCHE PATENTSCHRIFT

(11) **EP 2 531 380 B1**
(45) Veröffentlichungstag und Bekanntmachung des Hinweises auf die Patenterteilung: **08.04.2015**
(21) Anmeldenummer: 11702615.3
(22) Anmeldetag: 01.02.2011
(51) Int. Cl.: B60R 19/22

(54) **ENERGIEABSORPTIONSSYSTEM**
ENERGY-ABSORPTION SYSTEM
SYSTÈME D'ABSORPTION D'ÉNERGIE

(30) Priorität: 01.02.2010 DE 102010006542
(43) Veröffentlichungstag der Anmeldung: 12.12.2012
(73) Patentinhaber: Faurecia Exteriors GmbH, 91781 Weissenburg (DE)
(72) Erfinder: GUKKENBERGER, Michael, 91785 Pleinfeld (DE); SANDNER, Norbert, 90763 Fürth (DE); KOLNSBERG, Ralf, 85104 Pförring (DE); GUND, Andreas, 91781 Weissenburg (DE); HESSE, Frank, 91757 Treuchtlingen (DE)
(74) Vertreter: Tischner, Oliver
(86) Internationale Anmeldenummer: PCT/EP2011/051369
(87) Internationale Veröffentlichungsnummer: WO 2011/092342

(56) Entgegenhaltungen:
- EP-A1- 0 254 530
- WO-A1-98/23467

## Beschreibung

Die Erfindung betrifft ein Energieabsorptionssystem zum Einbau zwischen Stoßfänger und Querträger eines Fahrzeuges. Das Dokument EP 0 254 530 A1 offenbart ein solches System nach dem Stand der Technik.

Es sind bereits unterschiedliche Konzepte zur Minderung der Aufprall bzw. Stoßenergie bekannt, die entweder den Aufprall für Fußgänger oder Minimierung von Fahrzeugschäden im unteren Geschwindigkeitsbereich (Pendelschläge oder Low Speed Damagebility) erfüllen.

Eine Energieabsorptionsvorrichtung für den Crash von Kraftfahrzeugen ist aus der DE 195 02 307 A1 bekannt. Dort ist ein energieabsorbierendes Deformationselement zwischen einem Stoßfänger und einem Längsträger eingebaut. Dieses Deformationselement umfasst eine durch Kammerwände begrenzte Deformationskammer, die bei einem Aufprall des Kraftfahrzeugs verformbar ist. Die Deformationskammer enthält als Energieabsorber eine Füllung aus Aluminiumschaum. Der Aluminiumschaum ist hier als Füllmaterial in ausgehärtetem Zustand enthalten.

Weiter ist ein Karosserie-Verkleidungsteil für Blechtragteile bei Kraftfahrzeugen bekannt (DE 196 44 075 A1), das eine profilierte Hohlstruktur aufweist, die vollständig mit Schaum ausgefüllt wird. Dazu wird eine schäumbare Masse in die Hohlstruktur eingebracht und durch Energiezufuhr, insbesondere durch Wärme-, Hochfrequenz- öder Mikrowellenenergie aufgeschäumt. Dieser Ausschäumvorgang wird abhängig von einem Crashfall bei der Herstellung der Verkleidungsteile durchgeführt, so dass entweder für den Fußgängerschutz oder für den Insassenschutz optimale Bedingungen herrschen.

Eine ähnliche Anordnung ist aus DE 195 40 787 A1 bekannt, wo Profilteile aus Blech als Längsträger, Querträger oder Aufpralldämpfer mit einem energieabsorbierenden Schaum, insbesondere einem PU-Schaum aufgeschäumt sind. Auch hier ist das Bauteil von Anfang an auf einen ganz bestimmten Crashfall ausgelegt.

Aus der DE 199 24 617 A1 ist ein Energieabsorptionssystem an einem Kraftfahrzeug bekannt, die sich an unterschiedliche Crashbedingungen bzw. Crash-Szenarios anpassen lässt.

Der Erfindung liegt die Aufgabe zugrunde, ein Energieabsorptionssystem bzw. einen Pralldämpfer bereit zu stellen, der unmittelbar beim Crash sowohl auf den Fußgängerschutz als auch für den Low Speed Crash die Anforderungen erfüllt.

Die Erfindung liegt weiterhin die Aufgabe zugrunde, ein Energieabsorptionssystem an einer Kraftfahrzeug-Karosserie anzugeben, das als Zubehörbauteil am Fahrzeug angebracht wird und dessen Steifigkeit durch eine entsprechende Geometrie variabel einzustellen und die Steifigkeit sich in Abhängigkeit der Aufprallsituation durch eine Kraftumleitung anpasst.

Die Erfindung beschreibt ein steuerungsunabhängiges Energieabsorptionssystem (Pralldämpfer) zur Gesetzeserfüllung Fußgängerschutz und Low Speed Crash (Pendelschlag ECE und USA).

Dadurch, dass das Energieabsorptionssystem aus einem vorderen, zum Stoßfänger gewandten, als Weichkomponente wirkendes Weichteil und aus einem hinteren, zum Querträger gewandten, als Hartkomponente wirkendes Hartteil besteht, das Weichteil und das Hartteil sich jeweils über die gesamte Breite des Fahrzeugs erstrecken und beide Teile ineinander verzahnt sind, ist ein Energieabsorptionssystem bzw. ein Pralldämpfer geschaffen, der beim Crash sowohl die gesetzlichen Anforderungen für den Fußgängerschutz als auch für den Low Speed Crash erfüllt, d.h. den Pendelschlag ECE und USA. Das Weichteil ist hierbei für den Fußgängerschutz und das Hartteil für den Low Speed Crash zuständig. Durch die Verzahnung ist das Zusammenwirken beider Bauteile geschaffen, die sich dadurch ergänzen.

Das erfindungsgemäße Energieabsorptionssystem ist zweiteilig ausgebildet und besteht aus einem hinteren Bauteil, d.h. einem Hartteil als Hartkomponente für hohe Energieaufnahmen und aus einem vorderen Bauteil, d.h. einem Weichteil als Weichkomponente zur Energieaufnahme im Falle eines Fußgängeraufpralles. Das Energieabsorptionselement funktioniert steuerungs- und sensorunabhängig. Dadurch stellt das Energieabsorbtionselement keine Prozess-, Herstellungs- oder Kostenherausforderung dar.

Bevorzugt besteht das Weichteil aus einem Schaum, bevorzugt EPP-Schaum und das Hartteil aus Thermoplast. Das Energieabsorptionssystem ist im Weichteil durch den Schaum reversibel. Die variable Steifigkeit lässt sich durch die Geometrie der beiden Bauteile zueinander einstellen.

Erfindungsgemäß besteht das Hartteil aus einem Trageteil, auf dessen zum Weichteil gewandten Seite eine Vielzahl einzelner im Abstand b voneinander liegender Segmente angeordnet sind, die vom Trageteil abstehen und sich jedes Segment vertikal über die gesamte Höhe des Energieabsorptionssystems erstreckt. Die Segmente dienen als Hartkomponente und sollen die eingeleitete Kraft umleiten bzw. auf einen grösseren Bereich des Trageteils verteilen.

Erfindungsgemäß sind die Segmente im Querschnitt dreieckig ausgebildet, wobei ein erster Querschenkel auf dem Trageteil angeordnet und/oder mit diesem in einer Teilfläche identisch ist und sich ausgehend von diesem Querschenkel zwei Verteilschenkel in Richtung zum Weichteil erstrecken. Die im Querschnitt dreieckigen Segmente werden so vom Querschenkel und den Verteilschenkeln gebildet. Mit dem Begriff Verteilschenkel soll ausgedrückt werde, dass die Verteilschenkel die eingeleitete Kraft verteilen sollen. Mit dem Begriff Querschenkel soll ausgedrückt werden, dass sich dieser parallel zum Querträger erstreckt.

Vorteilhafterweise sind alle drei Schenkel gleich lang und bilden ein im Querschnitt gleichseitiges Dreieck, welches im Inneren hohl ist. Der Beinimpactor kann dadurch auf den Verteilschenkeln abrutschen, bis er die Verteilschenkel zweier benachbarter Segmente berührt. Er ist dann auf die gesamte Tiefe in das Energieabsorptionssystem eingedrungen.

Zur Verstärkung können im Inneren der Segmente Verstärkungsrippen angeordnet sein.

Bevorzugt sind die Verteilschenkel in einem Winkel von 60° zum Querschenkel angeordnet. Bei diesem Winkel ist sowohl eine gute Energieaufnahme als auch ein gutes Abrutschen gewährleistet.

Die Tiefe a dieser Segmente liegt in einer Ausführungsform im Bereich von 40-70 mm, bevorzugt im Bereich zwischen 50-60 mm und besonders bevorzugt bei 57 mm. Die Tiefe bestimmt die Länge der Abrutschzone und begrenzt zusammen mit dem horizontalen Abstand b der Segmente den Raum zur Aufnahme des Beinimpactors, bzw. die Eintauchtiefe des Beinimpactors beim Fußgängerschutz.

Bevorzugt sind die Segmente auf dem Trageteil in einem Abstand b von 30-35 mm angeordnet. Hierdurch ist genügend Raum für den eindringenden Beinimpactor geschaffen.

Bevorzugt besteht das Weichteil aus einer zum Stoßfänger gewandten Grundplatte und ausgehend von dieser Grundplatte erstrecken sich Dämpfungselemente 11 in Richtung zum Hartteil. Diese Dämpfungselemente greifen in den Raum zwischen die Segmente ein.

Zur besseren Stabilität sind die Grundplatte und die Dämpfungselemente einstückig ausgebildet und sind in einem Arbeitsschritt geschäumt.

Bevorzugt füllen die Dämpfungselemente den Raum zwischen zwei Segmenten aus, so dass der gesamte Raum zwischen den Segmenten zur Dämpfung genutzt wird.

Bevorzugt sind im Querschnitt gesehen das Weichteil und das Hartteil einseitig flächige Bauteile mit der zum Stoßfänger gewandten Fläche des Weichteils und der zum Querträger gewandten Fläche des Hartteils. Dadurch kann das Energieabsorptionssystem ohne Umbauten zwischen Stoßfänger und Querträger eines Fahrzeuges angeordnet werden.

Der Abstand dieser beiden Flächen und damit die horizontale Tiefe des Energieabsorptionssystems ist bevorzugt überall gleich und liegt bevorzugt zwischen 70 und 90 mm und beträgt in einer bevorzugten Ausführungsform 80 mm.

Das Energieabsorptionssystem ist in seinem Weichteil durch den Schaum reversibel. Die variable Steifigkeit ist durch die Geometrie der beiden Bauteile zueinander gegeben. Das Volumen dieses zweiteiligen Energieabsorptionssystems wird nicht zu den herkömmlichen Systemen verändert, d.h. es ist kein zusätzlicher Bauraum notwendig.

Das Energieabsorptionssystem ist dadurch gekennzeichnet, dass das System einen Fußgängeraufprall sowie Pendelschläge nach ECE und USA Gesetzesvorgaben gleichermaßen erfüllt und keine weitere Sensorik zur Unterscheidung der Aufprallsituation benötigt.

Die Funktion wird ausschließlich über die Bauteilgeometrie erfüllt. Die erforderliche Eindringtiefe für den Fußgängerschutz wird über das vordere Bauteil, das Weichteil erfüllt.

Die erforderliche Energieaufnahme bzw. Steifigkeit bei Pendelschlägen wird im Zusammenspiel der beiden Bauteile, d. h. des Weichteils mit dem Hartteil sichergestellt.

Das zweiteilige Energieabsorptionssystem kann mittels einfachen Montageprozess als Zubehörteil am Fahrzeug (z. B. durch Einhängen, Verclipsen, Verkleben) montiert werden. Die beiden Bauteile sind geometrisch so aufeinander ausgelegt, dass die eingeleitete Kraft umgeleitet wird. Die Verbindung der beiden Teile kann formschlüssig über Verclipsen oder Verkleben mittels Klebeband erfolgen.

Die Anordnung der Crashbereiche, die der Energieaufnahme des Pendelschlages genügt, ist in Übereinstimmung mit dem Beinimpactor ausgelegt. An jeder Stelle des Prüfbereiches kann der Beinimpactor in die Weichkomponente (Weichteil) auf die gesamte Tiefe eindringen um die Anforderungen des Fußgängerschutzes zu erfüllen. Beim Pendelschlag ist die betroffene Fläche des Energieabsorbers wesentlich größer. Hier übernimmt die Aufgabe überwiegend das Hartteil aus einer Hartkomponente im Zusammenspiel mit dem Schaumelement. Die Steifigkeit des Hartteils ist abhängig vom Fahrzeuggewicht und kann über eine FEM Berechnung an die jeweiligen Crashanforderungen durch Hinzufügen von Mineral und Glasfasern im Spritzgießprozess und/oder Versteifen mittels Rippen angepasst werden.

Bei Fahrzeugen mit niedrigem Fahrzeuggewicht kann auf das Oberteil, d.h. das Weichteil eventuell verzichtet werden.

Das System benötigt für die Erfüllung dieser Funktionen keine Sensorik und Steuerungselektronik.

Das Energieabsorptionssystem ist fahrzeugunabhängig und kann in jedem Fahrzeug implementiert werden.

Der erforderliche Bauraum ist bevorzugt zwischen 80 mm und 100 mm in X-Richtung festgelegt. Dies entspricht den heutigen Verhältnissen.

Aufgrund der Anordnung der Segmente der Hartkomponente mit entsprechend ausgelegten Winkeln ist es gewährleistet, dass der Beinimpactor an jeder Stelle auf die volle dafür vorgesehene Tiefe eindringen kann. Beim Auftreffen des Beines auf die Hartkomponente werden die auftretenden Kräfte verteilt. Das Bein wird immer so abgelenkt, dass die volle Eindringtiefe genutzt werden kann. Beim Auftreffen eines größeren Hindernisses wie Pendel wird die Energie über mehrere Segmente verteilt. Der Schaum wirkt dabei verformungshemmend und erhöht die Aufnahme von Energie.

Nachfolgend wird die Erfindung anhand von Figuren weiter erläutert. Es zeigen:
- Figur 1:: ein erfindungsgemäßes Energieabsorptionssystem im Schnitt vor einem Querträger eines Kraftfahrzeugs vor einem Crash mit einem Beinimpactor,
- Figur 2:: ein erfindungsgemäßes Energieabsorptionssystem im Schnitt vor einem Querträger eines Kraftfahrzeugs vor einem Crash mit einem Pendel,
- Figur 3:: eine Ansicht eines Energieabsorptionssystems an einem Querträger,
- Figur 4:: den Gegenstand von Figur 3 in einer Explosionszeichnung,
- Figur 5:: einen Schnitt durch ein Energieabsorptionssystem zwischen einem Querträger und einem Stoßfänger,
- Figur 6:: einen Schnitt gemäß Linie A-A von Figur 5,
- Figur 7:: einen Schnitt durch ein Energieabsorptionssystem zwischen einem Querträger und einem Stoßfänger mit schematisch gezeigter Eindringtiefe eines Beinimpactors und
- Figur 8:: ein Energieabsorptionssystem im Schnitt vor einem Querträger eines Kraftfahrzeugs vor einem Crash mit einem Prüfbereich für den Pendelschlag.

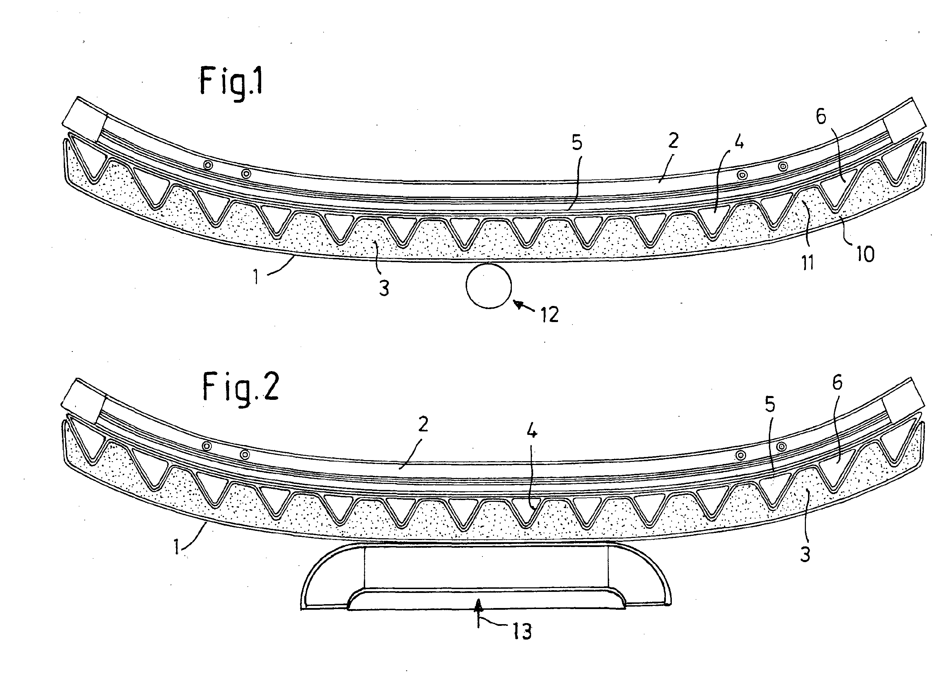

Figur 1 zeigt ein erfindungsgemäßes Energieabsorptionssystem im Schnitt vor einem Querträger 2 eines Kraftfahrzeugs vor einem Crash mit einem Beinimpactor 12. Das Energieabsorptionssystem ist zwischen dem Stoßfänger 1 und dem Querträger 2 des Fahrzeuges angeordnet und besteht aus einem vorderen, zum Stoßfänger 1 gewandten Weichteil 3 und einem hinteren, zum Querträger gewandten Hartteil 4. Beide Bauteile 3, 4 erstrecken sich über die gesamte Breite des Fahrzeugs. Das Weichteil 3, welches an den Stoßfänger 1 angrenzt, ist so ausgebildet, dass es eine Weichkomponente bildet und das Hartteil 4, welches an den Querträger 2 angrenzt, ist als Hartkomponente ausgebildet. Das Weichteil 3 besteht aus einem EPP-Schaum und das Hartteil 4 aus einem Thermoplast. Beiden Bauteile 3, 4 sind ineinander verzahnt. Mit dem Bezugszeichen 12 ist ein Beinimpactor 12 bezeichnet.

Figur 2 zeigt ein erfindungsgemäßes Energieabsorptionssystem gemäß Figur 1 im Schnitt vor einem Querträger 2 eines Kraftfahrzeugs vor einem Crash mit einem Pendel 13. Das Energieabsorptionssystem ist zwischen dem Stoßfänger 1 und dem Querträger 2 des Fahrzeuges angeordnet und besteht aus einem vorderen, zum Stoßfänger 1 gewandten Weichteil 3 und einem hinteren, zum Querträger gewandten Hartteil 4.

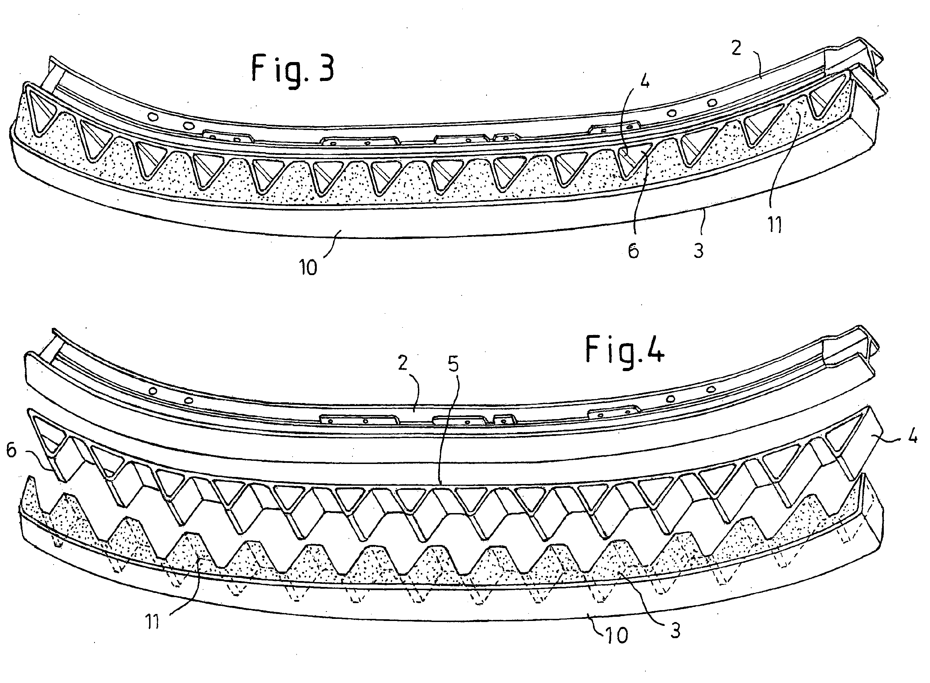

Figur 3 zeigt eine Ansicht eines Energieabsorptionssystems zwischen einem Stoßfänger 1 und dem Querträger 2 eines Fahrzeuges und Figur 4 zeigt das Energieabsorptionssystem gemäß Figur 3 in Explosionszeichnung. Es ist gut zu erkennen, dass das Weichteil 3 mit dem Hartteil 4 verzahnt ist.

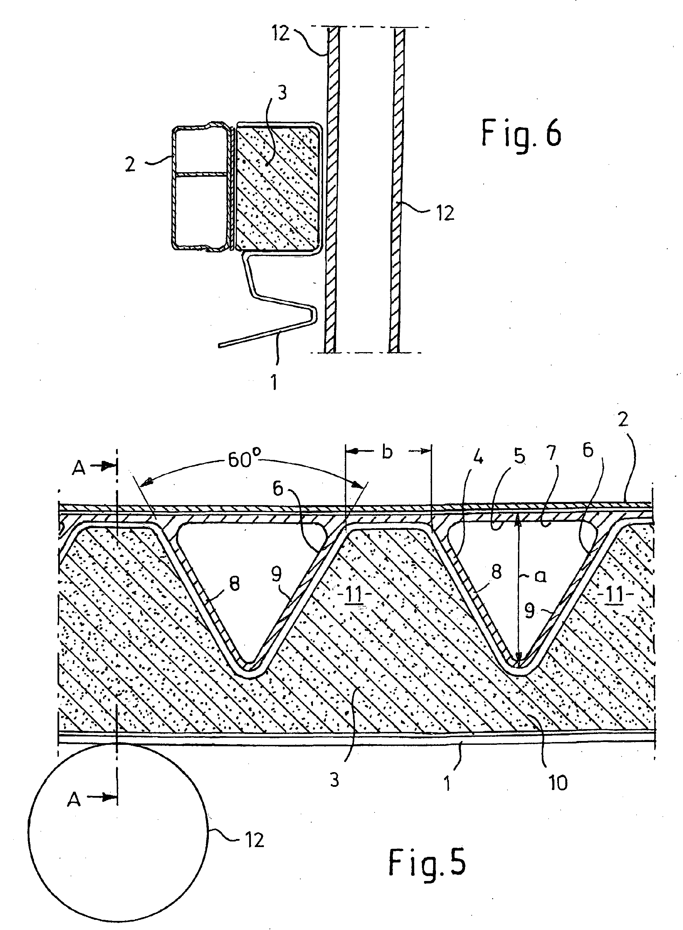

Figur 5 zeigt einen Schnitt durch ein Energieabsorptionssystem zwischen einem Querträger 2 und einem Stoßfänger 1. Das Hartteil 4, als Hartkomponente wirkende Bauteil, besteht aus einem Trageteil 5, auf dessen zum Weichteil 3 gewandten Seite eine Vielzahl einzelner Segmente 6 angeordnet sind, die vom Trageteil 5 abstehen. Diese Segmente 6 sind im Querschnitt dreieckig ausgebildet, wobei ein Querschenkel 7 auf dem Trageteil 5 angeordnet ist bzw. in dieser Ausführungsform mit diesem identisch ist. Ausgehend von diesem Querschenkel 7 erstrecken sich zwei Verteilschenkel 8, 9 in Richtung zum Weichteil 3. Alle drei Schenkel 7, 8, 9 sind gleich lang und bilden ein im Querschnitt gleichseitiges Dreieck. Im Inneren sind die Segmente 6 hohl. Im Inneren können die Segmente 6 auch Verstärkungsrippen aufweisen. Die zwei Verteilschenkel 8, 9 sind in einem Winkel von 60° zum Querschenkel 7 angeordnet. Die Tiefe a dieser Segmente 6 liegt in dieser Ausführungsform bei 57 mm. Die Segmente 6 sind auf dem Trageteil 5 in einem Abstand b von 30-35 mm angeordnet.

Das vordere Bauteil, d.h. das Weichteil 3 ist als Weichkomponente ausgebildet und ist mit dem hinteren, d.h. dem Hartteil 4 verzahnt. Das Weichteil 3 besteht aus einer Grundplatte 10. Ausgehend von dieser Grundplatte 10 erstrecken sich Dämpfungselemente 11 zum Hartteil 4 hin. Grundplatte 10 und die Dämpfungselemente 11 sind einstückig ausgebildet und in einem Arbeitsschritt geschäumt. Die Dämpfungselemente 11 füllen den Raum zwischen zwei Segmenten 6 voll aus. Im Querschnitt gesehen bilden das Weichteil 3 und das Hartteil 4 ein flächiges Bauteil 3, 4 mit der zum Stoßfänger 1 gewandten Fläche des Weichteils 3 und der zum Querträger 2 gewandten Fläche des Hartteils 4. Der Abstand dieser beiden Flächen ist überall gleich und beträgt 80 mm.

Wesentlich für die Funktionsweise ist, dass bei einem Aufprall des Beinimpaktors 12 auf das Energieabsorptionssystem der Beinimpaktor 12 die Dämpfungselemente 11 zusammendrückt. Prallt der Beinimpaktor 12 auf die beiden Schenkel 8, 9 so wird er in Richtung zum Trageteil 5 abgelenkt und dadurch ebenfalls abgefedert. Die in den Figuren eingezeichneten Maße zeigen eine bevorzugte Ausführungsform des Energieabsorptionssystems.

Figur 6 zeigt einen Schnitt gemäß Linie A-A von Figur 5. Gleiche Bezugszeichen zeigen auch den gleichen Gegenstand.

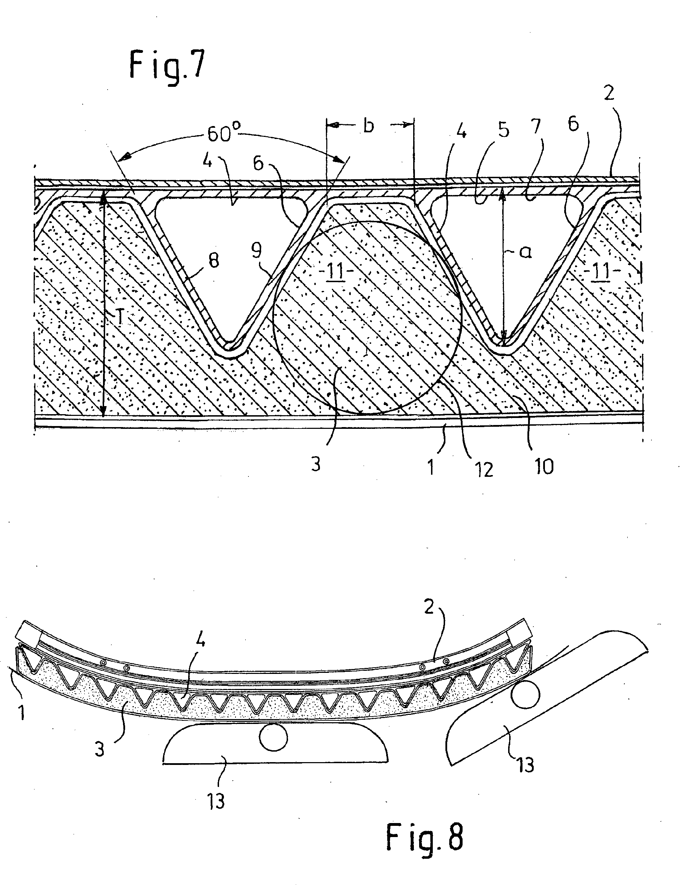

Figur 7 zeigt einen Schnitt durch ein Energieabsorptionssystem gemäß Figur 5 zwischen einem Querträger 2 und einem Stoßfänger 1 mit schematisch gezeigter Eindringtiefe eines Beinimpactors 12. Der Beinimpactor 12 ist auf den Verteilschenkeln 8, 9 abgerutscht und befindet sich zwischen diesen und berührt in der Endstellung beide Verteilschenkel 8, 9. Die Figur zeigt nur schematisch den eingedrungenen Beinimpactor 12. Nicht gezeigt ist, dass der Beinimpactor 12 die Dämpfungselemente 11 zusammengedrückt hat.

Figur 8 zeigt ein Energieabsorptionssystem im Schnitt vor einem Querträger eines Kraftfahrzeugs vor einem Crash mit einem Prüfbereich für den Pendelschlag.

## Patentansprüche

1. Energieabsorptionssystem zum Einbau zwischen Stoßfänger (1) und Querträger (2) eines Fahrzeuges, wobei das Energieabsorptionssystem aus einem vorderen, zum Stoßfänger (1) gewandten, als Weichkomponente wirkendes Weichteil (3) und aus einem hinteren, zum Querträger (2) gewandten, als Hartkomponente wirkendes Hartteil (4) besteht, das Weichteil (3) und das Hartteil (4) sich jeweils über die gesamte Breite des Fahrzeugs erstrecken und beide Teile (3, 4) ineinander verzahnt sind, wobei das Hartteil (4) aus einem Trageteil (5) besteht, auf dessen zum Weichteil (3) gewandten Seite eine Vielzahl einzelner im Abstand (b) voneinander liegender Segmente (6) angeordnet sind, die vom Trageteil (5) abstehen, **dadurch gekennzeichnet, dass** sich jedes Segment (6) vertikal über die gesamte Höhe des Energieabsorptionssystems erstreckt, und dass die Segmente (6) im Querschnitt dreieckig ausgebildet sind, wobei ein erster Querschenkel (7) auf dem Trageteil (5) angeordnet und/oder mit diesem in einer Teilfläche identisch ist und sich ausgehend von diesem Querschenkel (7) zwei Verteilschenkel (8, 9) in Richtung zum Weichteil (3) erstrecken.

2. Energieabsorptionssystem nach Anspruch 1, **dadurch gekennzeichnet, dass** das Weichteil (3) aus einem Schaum, bevorzugt EPP-Schaum und das Hartteil (4) aus Thermoplast besteht.

3. Energieabsorptionssystem nach einem der vorherigen Ansprüche, **dadurch gekennzeichnet, dass** alle drei Schenkel (7, 8, 9) gleich lang sind und ein im Querschnitt gleichseitiges Dreieck bilden und im Inneren hohl sind.

4. Energieabsorptionssystem nach einem der vorherigen Ansprüche, **dadurch gekennzeichnet, dass** im Inneren der Segmente (6) Verstärkungsrippen angeordnet sind.

5. Energieabsorptionssystem nach einem der vorherigen Ansprüche, **dadurch gekennzeichnet, dass** die Verteilschenkel (8, 9) in einem Winkel von 60° zum Querschenkel (7) angeordnet sind.

6. Energieabsorptionssystem nach einem der vorherigen Ansprüche, **dadurch gekennzeichnet, dass** die Tiefe (a) dieser Segmente (6) im Bereich von 40-70 mm, bevorzugt im Bereich zwischen 50-60 mm und besonders bevorzugt bei 57 mm liegt.

7. Energieabsorptionssystem nach einem der vorherigen Ansprüche, **dadurch gekennzeichnet, dass** die Segmente (6) auf dem Trageteil (5) in einem Abstand (b) von 30-35 mm angeordnet sind.

8. Energieabsorptionssystem nach einem der vorherigen Ansprüche, **dadurch gekennzeichnet, dass** das Weichteil (3) aus einer zum Stoßfänger gewandten Grundplatte (10) besteht und ausgehend von dieser Grundplatte (10) sich Dämpfungselemente (11) in Richtung zum Hartteil (4) erstrecken und in den Raum zwischen die Segmente (6) eingreifen.

9. Energieabsorptionssystem nach Anspruch 8, **dadurch gekennzeichnet, dass** die Grundplatte (10) und die Dämpfungselemente (11) einstückig ausgebildet sind und in einem Arbeitsschritt geschäumt sind.

10. Energieabsorptionssystem nach Anspruch 8 oder 9, **dadurch gekennzeichnet, dass** die Dämpfungselemente (11) den Raum zwischen zwei Segmenten (6) ausfüllen.

11. Energieabsorptionssystem nach einem der Ansprüche 1 bis 10, **dadurch gekennzeichnet, dass** im Querschnitt gesehen das Weichteil (3) und das Hartteil (4) einseitig flächige Bauteile sind mit der zum Stoßfänger (1) gewandten Fläche des Weichteils (3) und der zum Querträger (2) gewandten Fläche des Hartteils (4).

12. Energieabsorptionssystem nach Anspruch 11, **dadurch gekennzeichnet, dass** der Abstand dieser beiden Flächen und damit die horizontale Tiefe (T) des Energieabsorptionssystenns bevorzugt überall gleich ist und zwischen 70 und 90 mm liegt und bevorzugt 80 mm beträgt.

## Claims

1. An energy-absorption system for installation between the bumper (1) and transverse beam (2) of a vehicle, wherein the energy absorption system consists of a front soft part (3) that faces the bumper (1) and acts as a soft component, and of a rear hard part (4) that faces the transverse beam (2) and acts as a hard component, the soft part (3) and the hard part (4) each extend over the entire width of the vehicle and both parts (3, 4) are interlocked, wherein the hard part (4) consists of a support part (5), on the side of which that faces the soft part (3) a multiplicity of individual segments (6) are arranged lying at a distance (b) from each other, which protrude from the support part (5), **characterized in that** each segment (6) extends vertically above the entire height of the energy-absorption system, and that the segments (6) are designed triangularly in the transverse section, wherein a first transverse limb (7) is arranged on the support part (5) and/or is identical with the latter in a subarea and two distribution limbs (8, 9) extend emanating from this transverse limb (7) in the direction towards the soft part (3).

2. An energy-absorption system according to claim 1, **characterized in that** the soft part (3) consists of a foam, preferably EPP foam and the hard part (4) of a thermoplastic material.

3. An energy-absorption system according to one of the preceding claims, **characterized in that** all three limbs (7, 8, 9) are equally long and form an equilateral triangle in the transverse section and are hollow inside.

4. An energy-absorption system according to one of the preceding claims, **characterized in that** reinforcing ribs are arranged inside the segments (6).

5. An energy-absorption system according to one of the preceding claims, **characterized in that** the distribution limbs (8, 9) are arranged at an angle of 60º to the transverse limb (7).

6. An energy-absorption system according to one of the preceding claims, **characterized in that** the depth (a) of these segments (6) are in the range of 40-70 mm, preferably in the range between 50-60 mm and especially preferably 57 mm.

7. An energy-absorption system according to one of the preceding claims, **characterized in that** the segments (6) are arranged on the support part (5) at a distance (b) of 30-35 mm.

8. An energy-absorption system according to one of the preceding claims, **characterized in that** the soft part (3) consists of a base plate (10) that faces the bumper and absorbers (11) emanating from this base plate (10) extend in the direction towards the hard plate (4) and engage in the space between the segments (6).

9. An energy-absorption system according to claim 8, **characterized in that** the base plate (10) and the absorbers (11) are designed in one piece and are foamed in one work step.

10. An energy-absorption system according to claim 8 or 9, **characterized in that** the absorbers (11) fill in the space between the two segments (6).

11. An energy-absorption system according to one of claims 1 to 10, **characterized in that** seen in the transverse section the soft part (3) and the hard part (4) are on one side flat components with the area of the soft part (3) facing the bumper (1) and the area of the hard part (4) facing the transverse beam (2).

12. An energy-absorption system according to claim 11, **characterized in that** the distance of both of these areas and thus the horizontal depth (T) of the energy-absorption system is preferably the same everywhere and is between 70 and 90 mm and is preferably 80 mm.

## Revendications

1. Système d'absorption d'énergie destiné à être monté entre un pare-choc (1) et un support transversal (2) d'un véhicule, le système d'absorption d'énergie étant constitué d'une partie souple (3) disposée à l'avant, orientée vers le pare-choc (1) et agissant comme un composant souple, et d'une partie dure (4) disposé à l'arrière, orientée vers le support transversal (2) et agissant comme un composant dur, la partie souple (3) et la partie dure (4) s'étendant chacun sur toute la largeur du véhicule et les deux parties (3, 4) étant engrenées l'une dans l'autre, la partie dure (4) étant constituée d'une partie porteuse (5), sur le côté orienté vers la partie souple (3) de laquelle se trouvent une pluralité de segments (6) individuels disposés avec une distance (b) entre eux, qui font saillie à partir de la partie porteuse (5), **caractérisé en ce que** chaque segment (6) s'étend verticalement sur toute la hauteur du système d'absorption d'énergie, et **en ce que** les segments (6) présentent une section triangulaire, un premier montant transversal (7) étant disposé sur la partie porteuse (5) et/ou est identique à celui-ci dans une surface partielle et, à partir de ce montant transversal (7), s'étendent deux montants de répartition (8, 9) en direction de la partie souple (3).

2. Système d'absorption d'énergie selon la revendication 1, **caractérisé en ce que** la partie souple (3) est constituée d'une mousse, de préférence d'une mousse EPP et la partie dure (4) est constituée de thermoplastique.

3. Système d'absorption d'énergie selon l'une des revendications précédentes, **caractérisé en ce que** les trois montants (7, 8, 9) présentent la même longueur et forment un triangle à section équilatérale et sont creux à l'intérieur.

4. Système d'absorption d'énergie selon l'une des revendications précédentes, **caractérisé en ce que**, à l'intérieur des segments (6), se trouvent des nervures de renfort.

5. Système d'absorption d'énergie selon l'une des revendications précédentes, **caractérisé en ce que** les montants de répartition (8, 9) sont disposés à un angle de 60° par rapport au montant transversal (7).

6. Système d'absorption d'énergie selon l'une des revendications précédentes, **caractérisé en ce que** la profondeur (a) de ces segments (6) est de l'ordre de 40 à 70 mm, de préférence de l'ordre de 50 à 60 mm et plus particulièrement de 57 mm.

7. Système d'absorption d'énergie selon l'une des revendications précédentes, **caractérisé en ce que** les segments (6) sont disposés sur la partie porteuse (5) à une distance (b) de 30 à 35 mm.

8. Système d'absorption d'énergie selon l'une des revendications précédentes, **caractérisé en ce que** la partie souple (3) est constituée d'une plaque de base (10) orientée vers le pare-choc et, à partir de cette plaque de base (10), des éléments d'amortissement (11) s'étendent en direction de la partie dure (4) et dépassent dans l'espace entre les segments (6).

9. Système d'absorption d'énergie selon la revendication 8, **caractérisé en ce que** la plaque de base (10) et les éléments d'amortissement (11) sont conçus d'une seule pièce et sont remplis de mousse au cours d'une étape de travail.

10. Système d'absorption d'énergie selon la revendication 8 ou 9, **caractérisé en ce que** les éléments d'amortissement (11) remplissent l'espace entre deux segments (6).

11. Système d'absorption d'énergie selon l'une des revendications 1 à 10, **caractérisé en ce que**, en vue en coupe transversale, la partie souple (3) et la partie dure (4) sont des composants plats d'un côté avec la surface de la partie souple (3) orientée vers le pare-choc (1) et la surface de la partie dure (4) orientée vers le support transversal (2).

12. Système d'absorption d'énergie selon la revendication 11, **caractérisé en ce que** la distance entre ces deux surfaces et donc la profondeur horizontale (T) du système d'absorption d'énergie est de préférence la même partout et est de 70 à 90 mm et de préférence de 80 mm.
